# EUROPEAN PATENT SPECIFICATION

(11) **EP 3 354 594 B1**
(45) Date of publication and mention of the grant of the patent: **11.05.2022**
(21) Application number: 17766224.4
(22) Date of filing: 20.02.2017
(51) Int. Cl.: B65D 71/04, B65B 13/00, B65B 11/02, B65G 57/00

(54) **METHOD FOR PRODUCING PACKAGE**
VERFAHREN ZUR HERSTELLUNG EINER VERPACKUNG
PROCÉDÉ DE PRODUCTION D'UN PAQUET

(30) Priority: 18.03.2016 JP 2016055222
(43) Date of publication of application: 01.08.2018
(73) Proprietor: Corelex Shin-Ei Co., Ltd., Fuji-shi, Shizuoka 421-3306 (JP)
(72) Inventor: KUROSAKI Satoshi, Fuji-shi Shizuoka 421-3306 (JP)
(74) Representative: Strehl Schübel-Hopf & Partner
(86) International application number: PCT/JP2017/006098
(87) International publication number: WO 2017/159217

(56) References cited:
- EP-A1- 0 049 974
- EP-A1- 1 852 362
- WO-A1-2009/005442
- DE-U1-202007 018 783
- JP-A- 2005 186 962
- JP-B2- 2 596 855
- JP-B2- 3 147 324
- JP-U- S6 068 064
- US-A- 3 100 046
- US-A1- 2015 307 290

## Description

### [Technical Field]

The present invention relates to a method of producing a packing body in which a plurality of packaging bodies, such as paper boxes and vinyl packages, are packed together in a transportable form.

### [Background Art]

For example, paper products, such as toilet paper and tissue, are provided in the form of, for example, one roll or one box, each of which is a retail unit; and, when these are to be transported, a predetermined number of rolls or box bodies are packed together, and many products are made transportable at one time.

In general, many packaging bodies, such as cardboard boxes, are stacked on a pallet and formed into a packing body; and loading portions of, for example, a forklift are joined to the pallet to transport the many packaging bodies together with the pallet. When the packing body in which the plurality of packaging bodies are put together reaches a predetermined location, the pallet is subjected to operations such as separating the pallet from the packing body and recovering it for repeated use.

There exists a packing body in which many packaging bodies are stacked and packed so as to be transportable by using, for example, a forklift and without using the aforementioned pallet (refer to, for example, Patent Literature 1). In this packing body, parallelepiped packages having a certain size are stacked in multiple layers, and a plurality of fastening bands are wound around and secured to an outer periphery of this stack. In order to make it possible to insert the forks of the forklift, for example, at a position above two layers from a lowest layer where packaging bodies are stacked, a recessed portion or a space is provided at a side surface of the packing body.

JP S60 68064 U discloses a method of producing a packing body comprising the steps of placing a bundle of bodies,each having an upper surface, a lower surface, and side surfaces;placing reinforcing sheet materials comprising an upper reinforcing sheet material and a lower reinforcing sheet material so as to wrap outer peripheries of the side surfaces of the packaging bodies; and fastening the packaging bodies by placing fastening bands from an outer side of the reinforcing sheet materials,wherein the step of placing the reinforcing sheet materials includes placing the upper reinforcing sheet material on the side surfaces of the packaging bodies such that an end portion of the upper reinforcing sheet material protrudes from an upper surface of a packaging body in an uppermost layer and placing the lower reinforcing material on the side surfaces of the packaging bodies such that an end portion of the lower reinforcing sheet material protrudes from a lower surface of a packaging body in a lowermost layer,and placing the fastening bands on the edge portions with the upper and lower reinforcing sheet materials interposed therebetween.

### [Citation List]

### [Patent Literature]

[PTL 1] Japanese Patent No. 2596855

### [Summary of Invention]

### [Technical Problem]

Since an existing packing body has such a structure described above, for example, the fastening bands directly contact the packaging bodies disposed at edge portions of the packing body. Therefore, when the packaging bodies are stacked and tightly fastened by using, for example, the fastening bands, or when the packing body is lifted and moved by using a forklift or the like, for example, the fastening bands are driven into packaging bodies that are disposed at positions where the edges of the packing body are disposed, or concentration of stress load or the like on the packing body causes the packaging bodies disposed at the above-described positions to be damaged.

In view of the above-described problems, it is an object of the present invention to provide a method of producing a packing body that prevents stacked packaging bodies from becoming damaged at a low cost.

### [Solution to Problem]

A method of producing a packing body according to the present invention includes the steps of; stacking a plurality of packaging bodies, each having an upper surface, a lower surface, and a side surface; placing reinforcing sheet materials comprising an upper reinforcing sheet material and a lower reinforcing sheet material so as to wrap outer peripheries of the side surfaces of the packaging bodies that have been stacked; and fastening the packaging bodies that have been stacked by placing fastening bands from an outer side of the reinforcing sheet materials.

The step of placing the reinforcing sheet materials includes placing the upper reinforcing sheet material on the side surfaces of the packaging bodies to protrude an end portion of the upper
reinforcing sheet material from an upper surface of a packaging body in an uppermost layer and placing the lower reinforcing material on the side surfaces of the packaging bodies to protrude an end portion of the lower
reinforcing sheet material from a lower surface of a packaging body in a lowermost layer, and the step of fastening the packaging bodies that have been stacked includes bending the end portion of the upper
reinforcing sheet material that protrudes from the upper surface of the packaging body in the uppermost layer and the end portion of the lower
reinforcing sheet material that protrudes from the lower surface of the packaging body in the lowermost layer towards a side of an upper surface of the uppermost layer and towards a side of a lower surface of the lowermost layer, respectively, covering an edge portion of each packaging body, and placing the fastening band on the edge portions with the upper and lower reinforcing sheet materials interposed therebetween.

The step of stacking a plurality of packaging bodies includes disposing side by side packaging bodies that form a small-width layer above the lowermost layer and forming a groove-shaped space that does not prevent insertion and removal of a fork of a forklift, and the step of fastening the packaging bodies that have been stacked includes placing the reinforcing sheet material at a position that does not cover the groove-shaped space.

### [Advantageous Effects of Invention]

According to the present invention, it is possible to prevent damage to packaging bodies that are disposed at an outer peripheral portion of the packing body, in particular, at edge portions of an upper end and a lower end of the packing body, and to transport the packaging bodies with their appearance shapes being protected.

### [Brief Description of Drawings]

[Fig. 1] Fig. 1 is a perspective view of a packing body produced by using a method of producing a packing body according to an example of the present invention.
[Fig. 2] Fig. 2 is an explanatory view of a state in which a plurality of packaging bodies of the packing body of Fig. 1 are stacked.
[Fig. 3] Fig. 3 is an explanatory view of a step of covering the packaging bodies of Fig. 2 with an upper reinforcing sheet and a lower reinforcing sheet.
[Fig. 4] Fig. 4 is an explanatory view of a state in which the stacked packaging bodies are covered with the upper reinforcing sheet and the lower reinforcing sheet.

### [Description of Embodiments]

An embodiment of the invention is described below.

### [Examples]

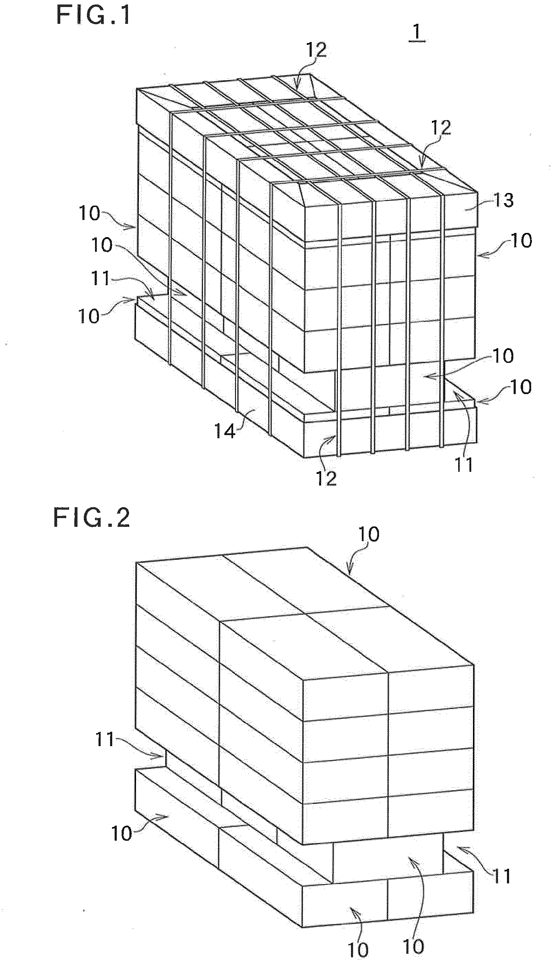

Fig. 1 is a perspective view of a packing body produced by using a method of producing a packing body according to an example of the present invention.

In an illustrated packing body 1, for example, 23 packaging bodies 10 are stacked, and are fastened by using a plurality of fastening bands 12. An upper reinforcing sheet 13 is placed on four packaging bodies 10 that are disposed in an uppermost layer, and a lower reinforcing sheet 14 is placed on four packaging bodies 10 that are disposed in a lowermost layer. In the method of producing a packing body according to the present invention, the number of packaging bodies to be packed is not limited to the aforementioned number of packaging bodies.

Fig. 2 is an explanatory view of a state in which the plurality of packaging bodies 10 of the packing body 1 of Fig. 1 are stacked. The packaging bodies 10 are, for example, paper boxes that contain a few hundred tissues, or resin packages, such as vinyl chloride packages, that accommodate a plurality of toilette paper rolls; and have shapes including an upper surface, a lower surface, and side surfaces.

The packaging bodies 10 exemplified here have a parallelepiped shape having an upper surface and a lower surface formed by long sides and short sides, or a substantially parallelepiped shape.

The four packaging bodies 10 in the lowermost layer in Fig. 2 are disposed side by side such that long sides of adjacent boxes or short sides of adjacent boxes contact each other, or such that the packaging bodies 10 are uniformly aligned in a longitudinal direction thereof.

For example, three packaging bodies 10 in a small-width layer are stacked on the upper surfaces of the four packaging bodies 10 in the lowermost layer. The three packaging bodies 10 are disposed side by side such that they are orthogonal to the longitudinal direction of the four packaging bodies 10 below (in the lowermost layer), that is, such that the orientations of the three packaging bodies 10 are rotated by 90 degrees, and edge portions of the packaging bodies 10 in the longitudinal direction are adjacent to each other. That is, in a layer directly above the lowermost layer, the three packaging bodies 10 are disposed side by side so as to form the small-width layer whose width is smaller than that of the lowermost layer.

Similarly to the above-described lowermost layer, four packaging bodies 10 are stacked on the upper surfaces of the three packaging bodies 10, which are disposed side by side so as to form the small-width layer, so as to be aligned in the longitudinal direction of the four packaging bodies 10. Further, for example, three more layers in which four packaging bodies are similarly disposed side by side are stacked thereupon.

For example, along the longitudinal direction of the lowermost layer, above longitudinal edges of the packaging bodies 10 that are disposed side by side in the lowermost layer, the packing body 1 shown in each figure includes the small-width layer such that recessed portions open sideways.

For example, the forks of a forklift are inserted into the recessed portions, and the packing body 1 that is fastened tightly by the fastening bands 12 as shown in Fig. 1 is transportable by the forklift.

The above-described recessed portions are spaces 12 that are formed by the small-width layer and the layers that are stacked above and below the small-width layer. The recessed portions are provided at two opposing side surfaces of the packing body 1, and have sizes that allow the forks of the forklift to be freely inserted and removed.

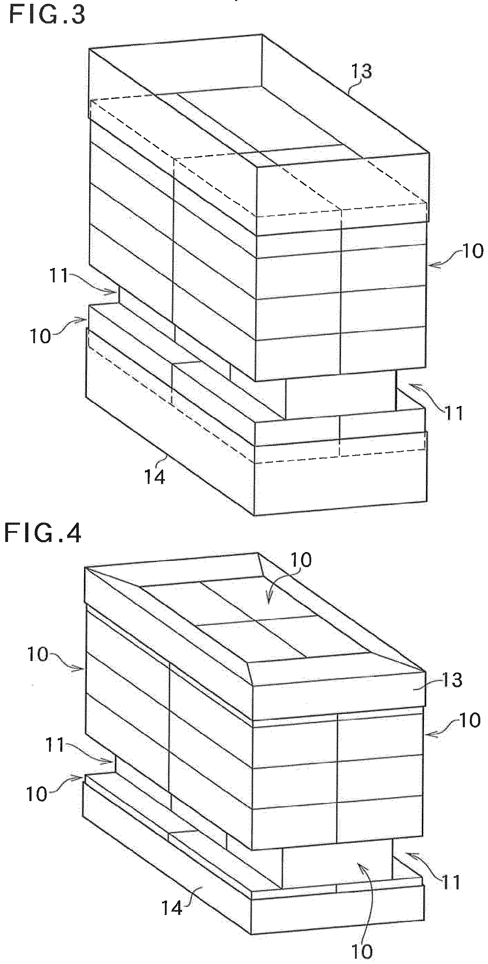

Fig. 3 is an explanatory view of a step of covering the packaging bodies 10 of Fig. 2 with the upper reinforcing sheet 13 and the lower reinforcing sheet 14.

The upper reinforcing sheet 13 and the lower reinforcing sheet 14 are sheet materials that are the same, and are, for example, pieces of kraft paper made in the form of a belt and capable of being placed along and surrounding outer peripheral surfaces of the packaging bodies 10 disposed side by side as described above without, for example, flap processing. For the upper reinforcing sheet 13 and the lower reinforcing sheet 14, a suitable sheet material is one having flexibility that allows it to wrap the packaging bodies 10 along the shape of the packaging bodies 10; having surfaces provided with a proper tension; and, when subjected to, for example, an external force, capable of dispersing the external force along, for example, the surfaces without being torn.

The upper reinforcing sheet 13 is, for example, placed so as to wrap outer peripheries of the side surfaces of the packaging bodies 10 that are disposed side by side in the uppermost layer mentioned above. At this time, an upper end portion of the upper reinforcing sheet 13 in a lateral direction protrudes above the upper surfaces of the packaging bodies 10 like a turned-up collar.

Specifically, a lower portion of the belt-shaped upper reinforcing sheet 13 is, for example, wound so as to wrap the outer peripheries of the packaging bodies 10 disposed side by side in the uppermost layer; and, for example, both end portions of the upper reinforcing sheet 13 in the longitudinal direction are bonded with an adhesive so as to form a ring shape.

At this time, in order to prevent the upper reinforcing sheet 13 from falling off from the outer peripheries of the packaging bodies 10 disposed side by side in the same layer (the uppermost layer), the outer peripheries of the packaging bodies 10 disposed side by side are tighten up by a proper amount, and the upper reinforcing sheet 13 is bonded so as to form the ring shape.

The lower reinforcing sheet 14 is, for example, placed so as to wrap outer peripheries of the side surfaces of the packaging bodies 10 disposed side by side in the lowermost layer of the packing body 1.

At this time, a lower end portion of the lower reinforcing sheet 14 in the lateral direction protrudes below the lower surfaces of the packaging bodies 10 so as to appear like wearing a skirt.

Specifically, a lower portion of the belt-shaped lower reinforcing sheet 14 is wound so as to wrap the outer peripheries of the packaging bodies 10 disposed side by side in the lowermost layer; and, for example, both end portions of the lower reinforcing sheet 14 in the longitudinal direction are bonded with, for example, an adhesive so as to form a ring shape.

At this time, in order to prevent the lower reinforcing sheet 14 from falling off from the outer peripheries of the packaging bodies 10 disposed side by side in the lowermost layer, the outer peripheries of the packaging bodies 10 disposed side by side are tighten up by a proper amount, and the lower reinforcing sheet 14 is bonded so as to form the ring shape.

When the reinforcing sheets are to be placed on the packing body 1 (the stacked packaging bodies 10), in particular, when the lower reinforcing sheet 14 is to be placed on the outer peripheries of the side surfaces of the packaging bodies 10, the placement is performed such that the aforementioned spaces 11 are not covered by the lower reinforcing sheet 14, that is, an upper end portion of the lower reinforcing sheet 14 is positioned so as not to protrude above the upper surfaces of the packaging bodies 10 in the layer below the spaces 11.

Fig. 4 is an explanatory view of a state in which the stacked packaging bodies 10 are covered with the upper reinforcing sheet 13 and the lower reinforcing sheet 14.

The aforementioned protruding portion of the upper reinforcing sheet 13 that is turned up like a collar is bent so as to contact the upper surfaces of the packaging bodies 10 disposed side by side in the uppermost layer or so as to cover the upper surfaces thereof.

By such bending, upper edge portions of the outer peripheries of the packaging bodies 10 disposed side by side in the uppermost layer (for example, an upper edge portion of the packing body 1 or corners of an uppermost portion of the packing body 1) are covered by the upper reinforcing sheet 13. The protruding portion of the lower reinforcing sheet 14 that appears like wearing a skirt is bent so as to contact the lower surfaces of the packaging bodies 10 disposed side by side in the lowermost layer or so as to cover the lower surfaces thereof.

By such bending, lower edge portions of the outer peripheries of the packaging bodies 10 disposed side by side in the lowermost layer (for example, a lower edge portion of the packing body 1 or corners of a lowermost portion of the packing body 1) are covered by the lower reinforcing sheet 14.

After covering the stacked packaging bodies 10 with the upper reinforcing sheet 13 and the lower reinforcing sheet 14 as shown in Fig. 4, the plurality of fastening bands 12 are placed therearound to tightly fasten them as shown in Fig. 1.

The plurality of fastening bands 12 are placed around an outer periphery of the packing body 1 in the longitudinal direction and an outer periphery of the packing body 1 in the lateral direction so as to form each fastening band 12 in ring shape. That is, the fastening bands 12 are placed around an upper surface and a lower surface of the packing body 1 so as to intersect each other in the form of a lattice.

When the fastening bands 12 are placed around the packing body 1 in this way, the fastening bands 12 are provided on the surfaces of the upper reinforcing sheet 13 and the surfaces of the lower reinforcing sheet 14, so that a fastening force that is applied to a bent corner portion of each packaging body 10, which corresponds to the edge portions of the packing body 1, is dispersed via the upper reinforcing sheet 13 and the lower reinforcing sheet 14.

Therefore, it is possible to suppress damage to, in particular, for example, the bent corner portions of the packaging bodies 10, which correspond to the edge portions of the packing body 1, and to reduce the weight of package materials and boxes that form the packaging bodies 10. Even if the packaging bodies 10 are made of light paper materials or resin package materials, such as vinyl, it is possible to prevent damage during, for example, transport, and to reduce the weight of the packing body 1.

In order to disperse a fastening force, a suitable type of fastening band 12 is a large-width type because the contact area with the upper reinforcing sheet 13 and that with the lower reinforcing sheet 14 are increased.

### [Reference Signs List]

- 1: packing body
- 10: packaging body
- 11: space
- 12: fastening band
- 13: upper reinforcing sheet
- 14: lower reinforcing sheet

## Claims

1. A method of producing a packing body (1) comprising the steps of:
stacking a plurality of packaging bodies (10), each having an upper surface, a lower surface, and side surfaces;
placing reinforcing sheet materials comprising an upper reinforcing sheet material (13) and a lower reinforcing sheet material (14) so as to wrap outer peripheries of the side surfaces of the packaging bodies (10) that have been stacked; and
fastening the packaging bodies (10) that have been stacked by placing fastening bands (12) from an outer side of the reinforcing sheet materials,
wherein the step of placing the reinforcing sheet materials includes placing the upper reinforcing sheet material (13) on the side surfaces of the packaging bodies (10) such that an end portion of the upper reinforcing sheet material (13) protrudes from an upper surface of a packaging body in an uppermost layer and placing the lower reinforcing material (14) on the side surfaces of the packaging bodies (10) such that an end portion of the lower reinforcing sheet material (14) protrudes from a lower surface of a packaging body in a lowermost layer, and
wherein the step of fastening the packaging bodies (10) that have been stacked includes bending the end portion of the upper reinforcing sheet material (13) that protrudes from the upper surface of the packaging body in the uppermost layer and the end portion of the lower reinforcing sheet material (14) that protrudes from the lower surface of the packaging body in the lowermost layer towards a side of an upper surface of the uppermost layer and towards a side of a lower surface of the lowermost layer, respectively, covering an edge portion of each packaging body, and placing the fastening bands (12) on the edge portions with the upper and lower reinforcing sheet materials interposed therebetween.

2. The method of producing a packing body (1) according to Claim 1, wherein the step of stacking a plurality of packaging bodies (10) includes disposing side by side packaging bodies (10) that form a small-width layer above the lowermost layer and forming a groove-shaped space (11) that does not prevent insertion and removal of a fork of a forklift, and the step of fastening the packaging bodies (10) that have been stacked includes placing the reinforcing sheet materials at a position that does not cover the groove-shaped space (11).

## Patentansprüche

1. Verfahren zur Herstellung eines Verpackungskörpers (1), das die folgenden Schritte umfasst:
Stapeln einer Vielzahl von Paketkörpern (10), die jeweils eine obere Fläche, eine untere Fläche und Seitenflächen aufweisen;
Anordnen von Verstärkungsfolienmaterialien, die ein oberes Verstärkungsfolienmaterial (13) und ein unteres Verstärkungsfolienmaterial (14) umfassen, um die äußeren Umfänge der Seitenflächen der gestapelten Paketkörper (10) zu umhüllen; und
Befestigen der durch Anbringen von Befestigungsbändern (12) gestapelten Paketkörper (10) von einer Außenseite der Verstärkungsfolienmaterialien,
wobei der Schritt des Anordnens der Verstärkungsfolienmaterialien das Anordnen des oberen Verstärkungsfolienmaterials (13) auf den Seitenflächen der Paketkörper (10), so dass ein Endabschnitt des oberen Verstärkungsfolienmaterials (13) von einer oberen Fläche eines Paketkörpers in einer obersten Schicht vorsteht, und das Anordnen des unteren Verstärkungsmaterials (14) auf den Seitenflächen der Paketkörper (10), so dass ein Endabschnitt des unteren Verstärkungsfolienmaterials (14) von einer unteren Fläche eines Paketkörpers in einer untersten Schicht vorsteht, umfasst und
wobei der Schritt des Befestigens der gestapelten Paketkörper (10) das Biegen des Endabschnitts des oberen Verstärkungsfolienmaterials (13), der von der oberen Oberfläche des Paketkörpers in der obersten Schicht vorsteht, und des Endabschnitts des unteren Verstärkungsfolienmaterials (14), der von der unteren Oberfläche des Paketkörpers in der untersten Schicht vorsteht, in Richtung einer Seite einer oberen Oberfläche der obersten Schicht bzw. in Richtung einer Seite einer unteren Oberfläche der untersten Schicht, das Bedecken eines Randabschnitts jedes Paketkörpers und das Anbringen der Befestigungsbänder (12) auf den Randabschnitten mit den dazwischen liegenden oberen und unteren Verstärkungsfolienmaterialien umfasst.

2. Verfahren zum Herstellen eines Verpackungskörpers (1) nach Anspruch 1, wobei der Schritt des Stapelns einer Vielzahl von Paketkörpern (10) das Anordnen von Paketkörpern (10), die eine Schicht mit geringer Breite über der untersten Schicht bilden, nebeneinander und das Bilden eines rillenförmigen Raums (11), der das Einführen und Entfernen einer Gabel eines Gabelstaplers nicht verhindert, umfasst und der Schritt des Befestigens der gestapelten Paketkörper (10) das Platzieren der Verstärkungsfolienmaterialien an einer Position umfasst, die den rillenförmigen Raum (11) nicht bedeckt.

## Revendications

1. Procédé de production d'un paquet (1) comprenant les étapes de :
empilement d'une pluralité de corps d'emballage (10), chacun ayant une surface supérieure, une surface inférieure et des surfaces latérales ;
le placement de matériaux de feuille de renfort comprenant un matériau de feuille de renfort supérieur (13) et un matériau de feuille de renfort inférieur (14) de façon à envelopper des périphéries externes des surfaces latérales des corps d'emballage (10) qui ont été empilés ; et
la fixation des corps d'emballage (10) qui ont été empilés par placement de bandes de fixation (12) à partir d'un côté externe des matériaux de feuille de renfort,
dans lequel l'étape de placement des matériaux de feuille de renfort comporte le placement du matériau de feuille de renfort supérieur (13) sur les surfaces latérales des corps d'emballage (10) de telle manière qu'une partie d'extrémité du matériau de feuille de renfort supérieur (13) fasse saillie à partir d'une surface supérieure d'un corps d'emballage dans la couche la plus haute et le placement du matériau de renfort inférieur (14) sur les surfaces latérales des corps d'emballage (10) de telle manière qu'une partie d'extrémité du matériau de feuille de renfort inférieur (14) fasse saillie à partir d'une surface inférieure d'un corps d'emballage dans la couche la plus basse, et
dans lequel l'étape de fixation des corps d'emballage (10) qui ont été empilés comporte le pliage de la partie d'extrémité du matériau de feuille de renfort supérieur (13) qui fait saillie à partir de la surface supérieure du corps d'emballage dans la couche la plus haute et de la partie d'extrémité du matériau de feuille de renfort inférieur (14) qui fait saillie à partir de la surface inférieure du corps d'emballage dans la couche la plus basse vers un côté d'une surface supérieure de la couche la plus haute et vers un côté d'une surface inférieure de la couche la plus basse, respectivement, recouvrant une partie de bord de chaque corps d'emballage, et le placement des bandes de fixation (12) sur les parties de bord avec les matériaux de feuille de renfort supérieur et inférieur interposés entre celles-ci.

2. Procédé de production d'un paquet (1) selon la revendication 1, dans lequel l'étape d'empilement d'une pluralité de corps d'emballage (10) comporte la disposition côte à côte de corps d'emballage (10) qui forment une couche de petite largeur au-dessus de la couche la plus basse et la formation d'un espace en forme de rainure (11) qui n'empêche pas l'insertion et le retrait d'une fourche d'un chariot à fourche, et l'étape de fixation des corps d'emballage (10) qui ont été empilés comporte le placement des matériaux de feuille de renfort au niveau d'une position qui ne recouvre pas l'espace en forme de rainure (11).
